(19) Europäisches Patentamt
European Patent Office
Office européen des brevets

(11) EP 0 641 363 B1

(12) **EUROPEAN PATENT SPECIFICATION**

(45) Date of publication and mention of the grant of the patent:
**08.01.1997 Bulletin 1997/02**

(21) Application number: **93912718.9**

(22) Date of filing: **19.05.1993**

(51) Int Cl.[6]: **C08F 222/02**, C08F 8/12, C11D 3/37

(86) International application number:
**PCT/EP93/01242**

(87) International publication number:
**WO 93/23444 (25.11.1993 Gazette 1993/28)**

(54) **DETERGENT COMPOSITIONS CONTAINING COPOLYMERS**

COPOLYMERE ENTHALTENDE WASCHMITTELZUSAMMENSETZUNGEN

COMPOSITIONS DE DETERGENTS CONTENANT DES COPOLYMERES

(84) Designated Contracting States:
**CH DE ES FR GB IT LI NL SE**

(30) Priority: **21.05.1992 GB 9210869**
**26.03.1993 GB 9306368**

(43) Date of publication of application:
**08.03.1995 Bulletin 1995/10**

(73) Proprietors:
- **UNILEVER PLC**
**London EC4P 4BQ (GB)**
Designated Contracting States:
**GB**
- **UNILEVER N.V.**
**3013 AL Rotterdam (NL)**
Designated Contracting States:
**CH DE ES FR IT LI NL SE**

(72) Inventors:
- **CHRISTOPHER, David John**
**Ormskirk, Lancashire L39 4SQ (GB)**
- **ELMES, Alfred Roy**
**Wirral, Merseyside L62 8DL (GB)**
- **ERIKSEN, Sugrun**
**Wirral, Merseyside L62 2EF (GB)**
- **KHOSHDEL, Ezat**
**Wirral, Merseyside L64 9US (GB)**
- **SAVILLE, Derek Guy**
**Nr Chester, Cheshire CH3 8BH (GB)**

(74) Representative: **Fransella, Mary Evelyn et al**
**Unilever PLC**
**Patent Division**
**Colworth House**
**Sharnbrook**
**Bedford MK44 1LQ (GB)**

(56) References cited:
**DE-A- 2 307 775**
**FR-A- 2 333 005**
**US-A- 3 268 491**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 641 363 B1

## Description

### TECHNICAL FIELD

The present invention is concerned with the use of polycarboxylate copolymers as binders of divalent and polyvalent metals, as builders in detergent compositions, and as film substrates and detergency builders for water-soluble detergent and wash additive sachets.

### BACKGROUND AND PRIOR ART

Polycarboxylate polymers, especially acrylic and maleic polymers, are well-known ingredients of detergent compositions and provide various benefits. They are used, for example, as antiredeposition and antiincrustation agents; for detergency building, especially in conjunction with water-insoluble aluminosilicate builders; and for the structuring of detergent powders.

Although various polycarboxylate polymers have been disclosed in the literature as detergent ingredients, only polyacrylates and acrylate/maleate copolymers have found widespread use in commercial detergent products.

Water-soluble polymers of itaconic acid and their preparation are described in US 3 055 873 (Pfizer). These polymers are useful as antiredeposition aids in detergent compositions, and also have the capacity to form clear, extremely tough films.

US 3 405 060 (Carter et al/Monsanto) discloses the use of water-soluble polyitaconic acid and its water-soluble salts as sequestering agents for metal cations.

The use of the water-soluble salts of itaconic acid homopolymers, and of copolymers of itaconic acid with maleic acid, acrylic acid or aconitic acid, as builders in detergent compositions, is disclosed in GB 1 054 755 (Procter & Gamble).

EP 506 246A (Röhm & Haas), filed on 9 March 1992 and published on 30 September 1992, discloses the preparation of itaconic acid homopolymers and copolymers which are biodegradable and useful (inter alia) as detergent additives (antiredeposition aids) and scale inhibitors, and for the formation of clear, tough films. Low molecular weights ($M_w$ <10 000, preferably <5000) are preferred. The only comonomer described is acrylic acid.

EP 193 360A (Procter & Gamble) and US 4 725 655 (BASF) disclose copolymers of a monounsaturated dicarboxylic acid (eg maleic or itaconic acid), a monounsaturated monocarboxylic acid (eg acrylic or methacrylic acid), and optionally a non-carboxylic monounsaturated monomer, for example, vinyl acetate or acrylonitrile. There is no disclosure of a copolymer containing both itaconic acid and vinyl acetate units. The Procter & Gamble document discloses a terpolymer of acrylic acid, maleic acid and vinyl alcohol (molar proportions 45/45/10).

JP 61 246 294A (Nippon Oils and Fats) discloses a liquid detergent composition with fabric softening properties, containing a polymeric acid or salt derived from acrylic, maleic or itaconic acid. The polymer may optionally contain units of a vinyl monomer, for example, ethylene, butadiene, isoprene, 2-methyl-1-butene, 1-hexene, or isobutylene.

US 4 022 960 (Mima et al/Agency of Industrial Science and Technology) discloses copolymers of itaconic acid salts with vinyl monomers, such as methyl methacrylate, styrene and diallyl diglycol carbamate. The polymers have high refractive index and good transparency, and are useful for the moulding of optical elements such as lenses and prisms.

US 3 268 491 (Hattori et al/Kao) discloses the production of water-soluble copolymers of vinyl acetate and unsaturated dicarboxylic acids, including itaconic acid. The polymers preferably have molecular weights of 700-6000. Use for binding metal ions or in detergent compositions is not disclosed or suggested.

GB 1 530 397 (Sumitomo Chemical Co) discloses the preparation of highly absorbent copolymers by saponification of a cross-linked copolymer of a vinyl ester such as vinyl acetate with an ethylenically unsaturated carboxylic acid or ester which may be itaconic acid. Use for binding metal ions or in detergent compositions is not disclosed or suggested.

The literature also contains various disclosures of the polymerisation of vinyl acetate with small amounts (up to 9 mole%) of itaconic acid to improve adhesion properties of the polymers. Uses for such polymers include thermal recording media, dispersing agents, and shrinkable fibres, but not detergents. The level of itaconic acid in such polymers is too low for detergency building.

For example, JP 02 163 149A (Kao) discloses a cold-water-soluble film for packaging detergents, drugs etc, the film consisting of a copolymer of 2-8 mole% itaconic acid units, 88-98 mole% vinyl alcohol units and 0-4 mole% vinyl acetate units.

GB 1 385 131 (ICI USA Inc) discloses detergent compositions contianing non-toxic biodegradable polymeric builders which are copolymers of maleic acid and vinyl alcohol or acetate. No alternative or additional monomers are suggested. Itaconic acid is not disclosed.

The present invention is based on the discovery that block copolymers of itaconic acid and vinyl acetate, which may readily be prepared by aqueous solution radical polymerisation, exhibit, as such or in hydrolysed form, excellent

calcium binding capacity, better than that of the acrylic/maleic copolymers currently used in detergent compositions, and surprisingly under some conditions better than that of polyitaconic acid itself. Detergency evaluations have also indicated a kinetic advantage for these copolymers, so that their use is especially beneficial under energy-saving conditions (low wash temperature, short wash time). Film-forming is also better than that of polyitaconic acid.

It is also believed, and initial studies have confirmed this, that the presence of vinyl alcohol monomer blocks should facilitate biodegradation.

DEFINITION OF THE INVENTION

The present invention accordingly provides the use to bind divalent or polyvalent metals of a block copolymer comprising

(i) from 20 to 95 mole% of monomer units of the formula I

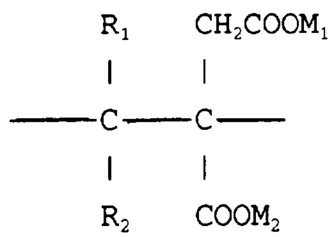

(I)

wherein each of $R_1$ and $R_2$, which may be the same or different, represents a hydrogen atom, a methyl group or an ethyl group, and each of $M_1$ and $M_2$, which may the same or different, is a hydrogen atom or a solubilising cation; and

(ii) from 5 to 80 mole% of monomer units of the formula II:

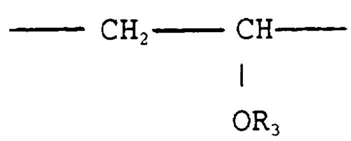

(II)

wherein $R_3$ represents a hydrogen atom or the group $-COR_4$, wherein $R_4$ is a $C_{1-4}$ alkyl group.

The invention in particular provides the use of a copolymer as defined in the previous paragraph as a detergency builder in a detergent composition.

DESCRIPTION OF THE INVENTION

The copolymer

The polymer used in the present invention is characterised by the presence of monomer units (i) derived from itaconic acid or a homologue thereof, in acid or salt form, and monomer units (ii) derived from vinyl alcohol or a lower vinyl ester, preferably vinyl acetate.

The copolymer comprises from 20 to 95 mole % of units (i) and from 5 to 80 mole % of units (ii). Preferably the copolymer comprises from 30 to 95 mole% of units (i) and from 5 to 70 mole% of units (i). Most preferably the copolymer comprises from 40 to 60 mole% of units (i) and from 40 to 60 mole% of units (ii).

The number average molecular weight preferably ranges from 1000 to 50 000, more preferably from 3000 to 30 000.

The weight average molecular weight preferably ranges from 5000 to 100 000, more preferably from 20 000 to 90 000.

The units (i) are derived from itaconic acid or a lower alkyl substitution product of itaconic acid.

In the formula I above, $M_1$ and $M_2$ are preferably hydrogen atoms or sodium, potassium, ammonium or lower-alkylsubstituted ammonium ions, and most preferably sodium ions.

In preferred units (i) both $R_1$ and $R_2$ represents a hydrogen atom, ie the units are of the formula V and are derived from itaconic acid itself or a salt thereof:

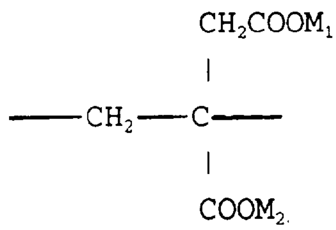

(V)

The units (ii) are derived from vinyl alcohol or a vinyl ester, preferably vinyl acetate; $R_4$ is preferably a methyl group. In the polymer, they may be present in the ester form as vinyl ester (preferably acetate) units, or in hydrolysed form as vinyl alcohol units.

The degree of hydrolysis of the vinyl ester has little effect on the builder efficacy, but can be used to control water solubility.

Without wishing to be bound by theory, it is believed that, based on the reactivity ratio for this comomomer system, the copolymer will assume a block arrangement, being composed of relatively long blocks of itaconic acid units and relatively short blocks of vinyl ester or vinyl alcohol units.

It appears that the presence of the vinyl alcohol or vinyl ester units, incorporated in order to enhance biodegradability, unexpectedly leads also to improvements in calcium ion binding capacity and to film-forming properties.

<u>Preparation of the copolymers</u>

The polymers may be prepared by copolymerising

(i) from 20 to 95 mole% of a compound of the formula III:

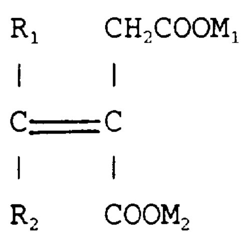

(III)

wherein $R_1$, $R_2$, $M_1$ and $M_2$ have the meanings given previously, and

(ii) from 5 to 80 mole% of a vinyl alcohol or ester of the formula IV:

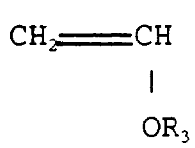

(IV)

wherein $R_3$ has the meaning given previously,
and, when $R_3$ in the compound of the formula IV is a $-COR_4$ group, optionally subjecting the resulting polymeric product to hydrolysis to effect conversion of ester groups derived from the compound of the formula IV to hydroxyl groups.

Optionally the ester groups may subsequently be hydrolysed but that does not appear to be essential.

The compound of the formula III is itaconic acid or a lower alkyl substitution product thereof in acid or salt form; and the compound of the formula IV is preferably vinyl acetate.

The polymerisation may conveniently be carried out in aqueous or aqueous/organic solution. The preferred media are water and water/ethanol. Polymers have also been prepared successfully in dilute hydrochloric acid.

The copolymerisation is advantageously conducted in the presence of a water-soluble initiator. The use of a water-soluble redox initiator is especially preferred.

Examples of suitable initiators include sodium, potassium or ammonium persulphate, 2,2'-azobis(amidinopropane) hydrochloride, 2,2'-azobis(cyanopentanoic acid); and redox initiators such as hydrogen peroxide (Fenton's reagent) and other hydroperoxide systems.

A preferred redox initiator is sodium or potassium persulphate in combination with sodium or potassium bisulphite.

The polymerisation may typically be performed under a nitrogen atmosphere in a degassed solvent (preferably in water, as previously indicated) at ambient pressure, or in a sealed tube under vacuum. The itaconic acid may be in free acid or salt form.

The entire monomer charge may be polymerised in a single batch; or alternatively one or other of the reagents may be fed in incrementally as the polymerisation progresses, for example, the vinyl ester may be fed gradually into the itaconic acid or itaconate salt.

The polymerisation reaction proceeds steadily at temperatures of 40-100°C; redox initiators are generally used at relatively low temperatures, in the region of 40°C, while other initiators may require temperatures in the 50-100°C range. For a reasonable conversion a reaction time of 1-5 days is required, typical yields being from 20 to 83% depending on reaction time.

However, an especially preferred procedure, combines the use of itaconic acid in monosodium salt form and a specific method and order of addition: incremental addition of monosodium itaconate to vinyl ester.

Monosodium itaconate is much more water-soluble than itaconic acid and the reaction can then be carried out at higher concentrations. The monosodium itaconate is preferably added incrementally to a suspension of vinyl ester (eg acetate) in water, this order of addition being preferred because of the greater reactivity of the itaconate.

When this preferred method is used, high yields are obtainable in a shorter period (a few hours rather than a few days).

When the reaction is complete, a suitable solvent such as isopropanol may be added to make the system homogeneous, and hydrogen peroxide may be added to polymerise any unreacted vinyl acetate.

## Binding of divalent and polyvalent metals

The subject of the invention is the use of the copolymers defined above to bind divalent and polyvalent metals, especially to bind calcium and magnesium ions in aqueous media.

These copolymers display calcium binding capacity substantially superior to that of sodium tripolyphosphate, one of the recognised benchmarks in this area especially in the detergents art; and superior also to that of acrylic/maleic copolymers which are commonly used in current detergent products.

It has also been found, surprisingly, that at high calcium ion concentrations the calcium binding capacity of the copolymers is greater than that of polyitaconic acid, and the rate of calcium ion concentration lowering is slightly greater than that of polyitaconic acid.

In detergent compositions, the polymers used in the present invention have been found to give comparable or slightly better detergency building under equilibrium conditions (a relatively long wash time and/or high temperature), and significantly better detergency building under usage conditions of short wash time and low temperature. This kinetic advantage makes the polymers especially suitable for incorporation in detergent compositions intended for use under such conditions.

However, the copolymers used in the present invention are highly useful as builders in detergent compositions of all types.

## Detergent compositions

The detergency builders used according to the present invention may be incorporated in detergent compositions of all physical types, for example, powders, liquids, gels, and solid bars. They may if desired be used in conjunction with other detergency builders.

The total amount of detergency builder in the compositions will suitably range from 15 to 80 wt%, and this may be constituted wholly or partially by the copolymeric materials of the invention. The amount of copolymer in the detergent composition may range, for example, from 1 to 80 wt%.

The copolymeric builder may advantageously be used in conjunction with an inorganic builder. Suitable inorganic builders include sodium carbonate, if desired in combination with a crystallisation seed for calcium carbonate, as disclosed in GB 1 437 950 (Unilever); crystalline and amorphous aluminosilicates, for example, zeolites as disclosed in GB 1 473 201 (Henkel), amorphous aluminosilicates as disclosed in GB 1 473 202 (Henkel) and mixed crystalline/amorphous aluminosilicates as disclosed in GB 1 470 250 (Henkel); maximum aluminium zeolite P (zeolite MAP) as described and claimed in EP 384 070A (Unilever); and layered silicates as disclosed in EP 164 514B (Hoechst).

Inorganic phosphate builders, for example, sodium orthophosphate, pyrophosphate and tripolyphosphate, may also be present, but the invention is of particular applicability to compositions containing reduced or zero levels of inorganic phosphate.

Organic builders that may be present include polymeric polycarboxylates such as those described and claimed in EP 435 505A and EP 433 010A (Unilever) as well as unmodified polyacrylates and acrylic/maleic copolymers; monomeric polycarboxylates such as citrates, gluconates, oxydisuccinates, tartrate monosuccinates and disuccinates, glycerol mono-, di- and trisuccinates, carboxymethyloxysuccinates, carboxymethyloxymalonates, dipicolinates, hydroxyethyliminodiacetates, nitrilotriacetates, ethylenediaminetetraacetates, alkyl and alkenyl malonates and succinates, and sulphonated fatty acid salts. This list is not intended to be exhaustive.

A preferred builder system comprises crystalline aluminosilicate in combination with a copolymer of the present invention. The aluminosilicate is preferably selected from zeolite A, maximum aluminium zeolite P (zeolite MAP) as described and claimed in EP 384 070A (Unilever), and mixtures of these. Zeolite MAP is zeolite P having a silicon to aluminium ratio not exceeding 1.33, preferably not exceeding 1.15, and most preferably not exceeding 1.07.

Detergent compositions of the invention will also contain, as essential ingredients, one or more detergent-active compounds which may be chosen from soap and non-soap anionic, cationic, nonionic, amphoteric and zwitterionic detergent-active compounds, and mixtures thereof. The amount of detergent-active compound present is suitably within the range of from 0.5 to 60 wt%.

Many suitable detergent-active compounds are available and are fully described in the literature, for example, in "Surface-Active Agents and Detergents", Volumes I and II, by Schwartz, Perry and Berch.

The preferred detergent-active compounds that can be used are soaps and synthetic non-soap anionic and nonionic compounds.

Anionic surfactants are well known to those skilled in the art. Examples include alkylbenzene sulphonates, particularly sodium linear alkylbenzene sulphonates having an alkyl chain length of $C_8$-$C_{15}$; primary and secondary alkyl sulphates, particularly sodium $C_{12}$-$C_{15}$ primary alcohol sulphates; alkyl ether sulphates; olefin sulphonates; alkane sulphonates; alkyl xylene sulphonates; dialkyl sulphosuccinates; and fatty acid ester sulphonates.

Nonionic surfactants that may be used include the primary and secondary $C_{8-18}$ alcohol ethoxylates, especially the $C_{12}$-$C_{15}$ primary and secondary alcohols, ethoxylated with an average of from 3 to 20 moles of ethylene oxide per mole of alcohol; alkylpolyglycosides; and polyhydroxyamides.

The choice of surfactant, and the amount present, will depend on the intended use of the detergent composition. For example, for machine dishwashing a relatively low level of a low-foaming nonionic surfactant is generally preferred. In fabric washing compositions, different surfactant systems may be chosen, as is well known by the skilled detergent formulator, for handwashing products and for machine washing products.

The total amount of surfactant present will of course depend on the intended end use and may be as low as 0.5% by weight, for example in a machine dishwashing composition, or as high as 60% by weight, for example in a composition for washing fabrics by hand. For fabric washing compositions in general, an amount of from 5 to 40% by weight is generally appropriate.

Detergent compositions suitable for use in most automatic fabric washing machines generally contain anionic non-soap surfactant, or nonionic surfactant, or combinations of the two in any ratio, optionally together with soap.

An especially preferred particulate detergent composition for high performance fabric washing comprises

(a) from 15 to 50 wt% of a surfactant system consisting essentially of:

(a1) nonionic surfactant which is an ethoxylated primary $C_8$-$C_{18}$ alcohol, preferably having an average degree of ethoxylation not exceeding 6.5 (from 60 to 100 wt% of the surfactant system), and

(a2) primary $C_8$-$C_{18}$ alkyl sulphate (from 0 to 40 wt% of the surfactant system);

(b) from 20 to 80 wt% of detergency builder comprising:

(b1) a crystalline aluminosilicate, and

(b2) a copolymer as previously defined;

(c) optionally other detergent ingredients to 100 wt%.

The aluminosilicate is preferably zeolite A, zeolite MAP or a mixture of the two.

Detergent compositions according to the invention may also suitably contain a bleach system. Machine dishwashing compositions may suitably contain a chlorine bleach, while fabric washing compositions may contain peroxy bleach compounds, for example, inorganic persalts or organic peroxyacids, which may be employed in conjunction with activators to improve bleaching action at low wash temperatures.

Preferred inorganic persalts for inclusion in fabric washing compositions are sodium perborate monohydrate and tetrahydrate, and sodium percarbonate, advantageously employed together with an activator.

Bleach activators, also referred to as bleach precursors, have been widely disclosed in the art. Preferred examples include peracetic acid precursors, for example, tetraacetylethylene diamine, now in widespread commercial use in conjunction with sodium perborate; and perbenzoic acid precursors. The quaternary ammonium and phosphonium bleach activators disclosed in US 4 751 015 and US 4 818 426 (Lever Brothers Company) are also of great interest.

Other materials that may be present in detergent compositions of the invention include sodium silicate, fluorescers, antiredeposition agents, inorganic salts such as sodium sulphate, enzymes, lather control agents or lather boosters as appropriate, pigments, and perfumes. This list is not intended to be exhaustive.

Detergent compositions of the invention may be prepared by any suitable method. Detergent powders are suitably prepared by spray-drying a slurry of compatible heat-insensitive components, and then spraying on or postdosing those ingredients unsuitable for processing via the slurry. The skilled detergent formulator will have no difficulty in deciding which components should be included in the slurry and which should be postdosed or sprayed on. The polymeric builder material of the invention may generally be included in the slurry if desired, although other methods of incorporation may of course be used if desired.

## Film forming properties

The copolymers which are used according to the present invention also display excellent film-forming properties.

This makes them especially useful in detergent compositions in powder form, where powder structuring is directly related to film-forming ability.

A further subject of the present invention is the use of the defined copolymers as a substrate material for water-soluble detergent or wash additive sachets. Sachets having walls composed of these materials will dissolve readily in the wash liquor, and the dissolved copolymer can then perform as a detergency builder.

It has been found that films prepared from the copolymers of the invention have superior flexibility and shorter dissolution times than do films derived from itaconate homopolymers.

## EXAMPLES

The invention will now be further illustrated by the following non-limiting Examples.

## Characterisation of the polymers

The polymers were characterised by infrared spectrometry and in some cases by nuclear magnetic resonance spectroscopy.

The infrared instrumentation used included the Nicolet (Trade Mark) 1705X Fourier Transform infrared spectrometer with MCT detector using the Nicolet 1280 processor, and the Nicolet SDXC Fourier Transform infrared spectrometer with DGS detector using the Nicolet 62 processor.

$^1H$ and $^{13}C$ NMR spectra were run on a Brucker (Trade Mark) WM 360 MHz Fourier Transform spectrometer.

Number-average and weight-average molecular weights of polymeric materials were determined by gel permeation chromatography. This was carried out using a Hewlett Packard (Trade Mark) HP 1090 liquid chromatograph fitted with a 30 cm x 7.5 cm TSK gel linear GMPW column. Organic-solvent-soluble polymers were measured against polystyrene standards, and water-soluble polymers against polyethylene glycol.

## Calcium binding

The calcium binding properties of the polymers were measured by titration of the samples with a calcium chloride solution using a calcium-ion-selective electrode of the type Radiometer (Trade Mark) F2112Ca. The calcium binding constant $pK_{Ca}2+$ was calculated by the method of C Tanford in Chapter 8, Multiple Equilibria, Physical Chemistry of Macromolecules, John Wiley, New York, 1961.

Values of $pK_{Ca}2+$ of 4.0 or above represent materials likely to be useful as detergency builders, either alone or in conjunction with other builder materials. The value for sodium tripolyphosphate is 6.0, and any figure higher than this indicates excellent building.

EXAMPLES 1 TO 13: PREPARATION OF COPOLYMERS

Examples 1 and 2

Preparation of poly(vinyl alcohol co-itaconate)

This Example describes the preparation of two copolymers of differing molecular weights, each from 50 mole% vinyl acetate and 50 mole% itaconic acid.

These polymers have the formula VI:

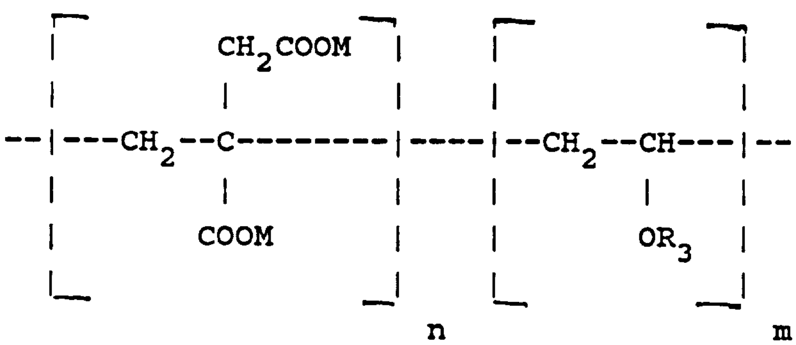

(VI)

wherein $R_3$ indicates hydrogen (predominant) or an acetyl group, and the indices n and m indicate the numbers of repeating units.

Preparation of the copolymer of Example 1

Vinyl acetate (23.4 ml, 0.25 mole), itaconic acid (30 g, 0.25 mol) and degassed water (200 ml) were charged into a flange flask and stirred at 40°C under a nitrogen atmosphere. The redox initiator, comprising sodium persulphate (0.8 g) and sodium metabisulphite (0.4 g), was added in increments each of 0.3 g over four days. The polymer-containing solution was concentrated to approximately half volume using a rotary evaporator and the concentrate poured into acetone. This precipitated the polymer which was washed with portions of acetone. The copolymer was then vacuum dried.

The copolymer was then neutralised and hydrolysed with sodium hydroxide (5.4 g, 1.35 mol) in hot water (50 ml). The sodium salt of the hydrolysed copolymer was precipitated into a large excess of ethanol (300 ml). After separation and removal of ethanol, the copolymer was dissolved in water, and freeze dried. The yield was 17.3 g (32%).

Preparation of the copolymer of Example 2

The copolymer of Example 2 was prepared by a similar method, but using sodium persulphate alone as the initiator. The reaction temperature was 60°C. The yield was 25.8 g (48%).

Characterisation

(i) Fourier transform infrared spectrum (KBr wafer)
Short-chain polycarboxylate (C=O stretch) 1580 $cm^{-1}$

(ii) $^1H$ NMR (deuterium oxide)
Chemical shifts (ppm):
1.6-3.3 backbone protons ($CH_2$ and CH)

(iii) Aqueous GPC molecular weights

| | $M_n$ | $M_w$ | D |
|---|---|---|---|
| Example 1 | 18 000 | 31 500 | 1.7 |

(continued)

| | $M_n$ | $M_w$ | D |
|---|---|---|---|
| Example 2 | 20 000 | 34 900 | 1.7 |

(iv) Calcium binding constants

| | $pK_{Ca}2+$ |
|---|---|
| Example 1 | 8.27 |
| Example 2 | 8.89 |

(v) Biodegradation

Biodegradation was tested by means of the modified SCAS test as described in OECD Guideline 302a. This test measures removal of test material by dissolved organic carbon analysis. It is believed that an 80% removal is a reasonable indication of biodegradability or adsorption.

The modified SCAS test for the polymer of Example 1 showed 93.3% removal, indicating virtually complete biodegradation.

Examples 3 and 4

Preparation of poly(vinyl acetate co-itaconate)

This Example relates to two copolymers of the formula V shown previously, but wherein $R_3$ indicates an acetyl group.

Preparation of the copolymer of Example 3

A copolymer was prepared by a method similar to that described in Examples 1 and 2, except that the vinyl acetate was added to the itaconate charge incrementally over 3 hours, and the hydrolysis step was omitted. The yield was 47%.

Preparation of the copolymer of Example 4

A copolymer was prepared by a similar method, but in 50/50 ethanol/water instead of water. The initiator was sodium persulphate, added incrementally with vinyl acetate at 60°C. The yield was 73%.

Characterisation

The polymers were characterised, as described in Examples 1 and 2, by Fourier transform IR, $^1H$ NMR, and GPC Molecular weight and calcium binding data were as follows:

| Example | $M_n$ | $M_w$ | D | $pK_{Ca}2+$ |
|---|---|---|---|---|
| 3 | 19 500 | 36 900 | 1.9 | 8.47 |
| 4 | 10 500 | 31 700 | 3.0 | 7.21 |

Examples 5 to 8

Polymerisation in dilute hydrochloric acid

Four further copolymers were prepared from a monomer mixture comprising 50 mole% of itaconic acid and 50 mole% of vinyl acetate, but using dilute hydrochloric acid as polymerisation medium.

Preparation of the copolymers of Examples 5 and 6

Itaconic acid (22.7 g, 0.174 mol) and vinyl acetate (15.0 g, 0.174 mol) were stirred with degassed 0.1M hydrochloric acid (80 ml) at 40°C. Sodium persulphate (0.5 g) with sodium metabisulphite (0.25 g) was added in four portions over

a period of 48 hours. The resulting copolymer was isolated by precipitation into acetone. It was then purified further by two more precipitations into acetone from concentrated aqueous solutions.

To obtain the disodium salt, the copolymer was then dissolved in water, neutralised with 6% sodium hydroxide solution to pH 8.5, and then freeze-dried. The yields were 10.3 g (29%) and 7.6 g (24%) respectively.

Preparation of the copolymer of Example 7

The copolymer of Example 7 was prepared by a method similar to that described above, except that the vinyl acetate was fed to the itaconic acid over a period of approximately 4 hours.

Preparation of the copolymer of Example 8

The copolymer of Example 8 was prepared by a method similar to that described in Examples 5 and 6 above, but using sodium persulphate alone as initiator, and 0.5M hydrochloric acid as polymerisation medium.

Characterisation

The polymers were characterised as described in previous Examples. Molecular weights and calcium binding constants were as follows:

| Example | $M_n$ | $M_w$ | D | $pK_{Ca}2+$ |
|---|---|---|---|---|
| 5 | 24 300 | 64 300 | 2.7 | 9.60 |
| 6 | 26 000 | 77 800 | 3.0 | 8.96 |
| 7 | 18 700 | 62 500 | 3.3 | 7.50 |
| 8 | 3 000 | 5 300 | 1.8 | 6.58 |

Examples 9 to 13

Preparation of polymers having different monomer ratios

Four copolymers (Examples 9 to 12) having different ratios of itaconic acid to vinyl acetate were prepared by the method (in water/ethanol) described in Examples 1 and 2.

A further copolymer (Example 13) having the same monomer ratio as that of Example 12 (95 mole % itaconic acid, 5 mole% vinyl acetate) was prepared by the method (in dilute hydrochloric acid) described in Examples 5 and 6. The yield was 14 g (35%).

Monomer ratios, molecular weights and calcium binding constants were as follows: (i) indicates itaconic acid, and (ii) indicates vinyl acetate.

| | (i) | (ii) | $M_n$ | $M_w$ | D | $pK_{Ca}2+$ |
|---|---|---|---|---|---|---|
| 9 | 60 | 40 | 20 800 | 49 600 | 2.4 | 8.61 |
| 10 | 70 | 30 | 8 600 | 20 500 | 2.4 | 6.29 |
| 11 | 80 | 20 | 3 000 | 81 800 | 27.5 | 6.74 |
| 12 | 95 | 5 | 10 400 | 24 800 | 2.4 | 8.50 |
| 13 | 95 | 5 | 27 100 | 88 900 | 3.3 | 9.20 |

Examples 14 and 15

Preparation of 50/50 itaconic acid/vinyl acetate copolymer by improved method

In these Examples, the improved method using incremental addition of monosodium itaconate to vinyl acetate was used.

Example 14

The reaction was conducted at a reactant concentration of approximately 30 wt%. The reagents were as follows:

| | | |
|---|---|---|
| Itaconic acid | 60.0 g | 0.46 mole |
| Vinyl acetate | 39.6 g | 0.46 mole |
| Sodium persulphate | 10.0 g | |
| Sodium hydroxide | 18.4 g | 0.46 mole |
| Deionised water | 265 ml | |

The sodium hydroxide was dissolved in deionised water (75 ml). To this solution was added the itaconic acid with stirring and cooling. The resulting solution of monosodium itaconate was transferred to a pressure equalising dropping funnel. Vinyl acetate was weighed into a 1-litre flange reactor, together with deionised water (150 ml). Sodium persulphate initiator was dissolved in deionised water (40 ml) in a separate dropping funnel.

The vinyl acetate/water suspension was stirred at 60°C under nitrogen and about one tenth of the initiator solution added, and then immediately dropwise addition of the itaconate solution and the remainder of the initiator was commenced. The additions took place over a total period of 2 hours, and the reaction mixture was then stirred for a further 4 hours.

Isopropanol (50 ml) was then added to homogenise the mixture, and after 10 minutes' stirring hydrogen peroxide (0.5 ml of 27.5 wt% aqueous solution) was added. Stirring was continued for a further 20 minutes, and the reactor then cooled.

The polymerisation liquor was concentrated using a rotary evaporator to remove free vinyl acetate, then diluted with water and fully neutralised to pH 9 with sodium hydroxide. The copolymer disodium salt was recovered by freeze drying. The yield was 110 g: 83% conversion based on $^1$H NMR.

The copolymer contained 5-10 mole% of free disodium itaconate. This could easily have been removed, for example, by precipitation/solvent extraction, but in order to simulate a large-scale commercialised production method, no measures were taken to remove unpolymerised itaconate.

Example 15

The procedure of Example 14 was followed, but this time at a reactant concentration of approximately 15 wt%.

The molecular weights and calcium binding constant were as follows:

| Example | $M_n$ | $M_w$ | D | $pK_{Ca}2+$ |
|---|---|---|---|---|
| 14 | 3300 | 11 000 | 3.3 | 7.2 |
| 15 | 4700 | 11 400 | 2.43 | 7.2 |

EXAMPLES 16 TO 20: DETERGENCY EVALUATIONS

In these experiments, the copolymer of Example 5 was compared with the commercial acrylic/maleic copolymer, Sokalan (Trade Mark) CP5, in various detergent formulations.

The measurements were carried out in the tergotometer using water of 30° French hardness (equivalent to 3 x $10^{-3}$ mole/litre $Ca^{2+}$), 0.5 litres of wash liquor, and an agitation rate of 60 reciprocations per minute.

In each wash, four cotton test cloths (each 7.63 cm square) carrying builder-sensitive model clay soil were used. Two replicate runs of each formulation were performed. After the wash was complete the test cloths were rinsed twice in 30°FH water and dried. Reflectance at 460 nm was measured before and after the wash.

The following abbreviations are used below:

| | |
|---|---|
| cocoPAS | coconut alcohol sulphate, sodium salt |
| LAS | linear alkylbenzene sulphonate |
| NI E7 | $C_{12-15}$ primary alcohol 7EO ethoxylate |
| NI E3 | $C_{12-15}$ primary alcohol 3EO ethoxylate |
| Silicate | sodium silicate |
| Carbonate | sodium carbonate |
| Perborate | sodium perborate monohydrate |
| Zeolite 4A | zeolite A: Wessalith (Trade Mark) P ex Degussa |
| Zeolite MAP | maximum aluminium zeolite P as described and claimed in EP 384 070A (Unilever), silicon to aluminium ratio 1.0. |

Examples 16 to 19, Comparative Examples A to D

Detergency values under equilibrium conditions

Wash liquors were prepared for tergotometer testing as described above. The wash liquors contained the ingredients listed below (in parts by weight), in amounts corresponding to a notional total "product" ( = 100 parts by weight) dosage of 5 g/litre.

| Example | 16, A | 17, B | 18, C | 19, D |
|---|---|---|---|---|
| CocoPAS | 5.2 | - | 5.2 | - |
| LAS | - | 12.0 | - | 12.0 |
| NI 7EO | 5.2 | 5.0 | 5.2 | 5.0 |
| NI 3EO | 6.6 | - | 6.6 | - |
| Zeolite 4A | 28.0 | 28.0 | - | - |
| Zeolite MAP | - | - | 28.0 | 28.0 |
| Polymer | 8.0 | 8.0 | 8.0 | 8.0 |
| Silicate | 4.5 | 4.5 | 4.5 | 4.5 |
| Carbonate | 8.0 | 8.0 | 8.0 | 8.0 |
| Perborate | 15.0 | 15.0 | 15.0 | 15.0 |
| | 80.5 | 80.5 | 80.5 | 80.5 |

The weights of the two zeolites are given on an anhydrous basis. Hydrated zeolite 4A is 78 wt% active, while hydrated zeolite MAP is 80 wt% active.

The polymer used in Examples 16 to 19 was the 50/50 PVA/itaconate polymer of Example 5, while in Comparative Examples A to D the polymer was Sokalan CP5 acrylate/maleate copolymer. Thus each polymer was evaluated in detergent compositions containing two different surfactant systems, and two different builders.

The wash temperature was 40°C and the wash time was 30 minutes. Detergency results were as follows:

| Example | Reflectance increase at 460 nm |
|---|---|
| 16 | 27.71 ± 0.03 |
| A | 27.64 ± 0.18 |
| | |
| 17 | 26.65 ± 0.18 |
| B | 26.30 ± 0.40 |
| | |
| 18 | 27.08 ± 0.23 |
| C | 27.49 ± 0.02 |
| | |
| 19 | 26.74 ± 0.40 |
| D | 27.24 ± 0.48 |

No significant differences were observed between the systems containing the polymers of the invention and those containing the acrylic/maleic copolymer, indicating that under equilibrium conditions (relatively long wash time and relatively high temperature) parity of performance with existing products could be obtained using the polymers of the invention.

Example 20, Comparative Example E: time-dependent measurements

A further series of comparisons was carried out, using shorter wash times and a lower wash temperature (20°C). The wash liquor formulations used and detergency results obtained are shown below.

Formulations (parts by weight)

| | 20 | E |
|---|---|---|
| CocoPAS | 1.3 | 1.3 |
| NI 7EO | 1.3 | 1.3 |
| NI 3EO | 1.65 | 1.65 |
| Zeolite 4A | 28.0 | 28.0 |
| Copolymer of Example 5 | 8.0 | - |
| Acrylate/maleate copolymer | - | 8.0 |
| Silicate | 4.5 | 4.5 |
| Carbonate | 8.0 | 8.0 |
| Perborate | 15.0 | 15.0 |
| | 67.75 | 67.75 |

Detergency results

| Wash time (min) | Reflectance increase at 460 nm | |
|---|---|---|
| | 20 | E |
| 1 | 4.55 | 3.92 |
| 2 | 7.22 | 4.25 |
| 3.5 | 10.08 | 8.71 |
| 5 | 13.61 | 10.31 |
| 7.5 | 15.13 | 12.52 |
| 10 | 16.12 | 14.32 |

These results show a significant benefit for the copolymers of the invention under usage conditions where the wash time is short and the temperature low. Thus use of these polymers allows energy saving without loss of wash performance.

Examples 21 to 24, Comparative Examples F and G

Further detergency evaluations at 20°C

In this experiment, the effect on detergency of replacing zeolite in a progressively by a polymer according to the invention was studied. A commercially available formulation (Comparative Example G) was also included in the study as a benchmark. The formulations are shown below.

Examples 21 to 24 used the 50/50 PVA/itaconate polymer of Example 7, while the commercial formulation Comparative Example G contained acrylate/maleate copolymer (Sokalan CP5).

Detergencies were compared in the tergotometer, using water of 20° French hardness (equivalent to 2 x $10^{-3}$ mole/litre $Ca^{2+}$), using 1 litre of wash liquor and a product dosage of 5 g/litre. Each tergotometer pot contained four cotton test cloths containing builder-sensitive soil (oil, silica and ink) as detergency monitors, and four clean cotton cloths as soil redeposition monitors.

Detergency and antiredeposition results (reflectance differences at 460 nm) are also shown below. The results for Examples 20 to 23 and Comparative Example F showed that there was a small improvement in cleaning in changing from the zeolite to the polymer, and also a small reduction of redeposition. The polymer on its own (16 wt%) performed at least as well as the same amount of polymer with a fairly large amount of zeolite: there was no advantage from using a larger (20 wt%) amount of polymer.

All these formulations performed slightly better than the commercial formulation G, especially where redeposition was concerned, despite the significantly higher wash pH of the latter (10.5 as compared with 9.1).

Examples 21 to 24, Comparative Examples F and G

| **Example** | **F** | **21** | **22** | **23** | **24** | **G** |
|---|---|---|---|---|---|---|
| **Formulations** (weight %) | | | | | | |
| cocoPAS | 1.7 | 1.7 | 1.7 | 1.7 | 1.7 | - |
| LAS | - | - | - | - | - | 6.5 |
| NI 7EO | 6.8 | 6.8 | 6.8 | 6.8 | 6.8 | 3.3 |
| NI 3EO | 8.5 | 8.5 | 8.5 | 8.5 | 8.5 | 6.2 |
| Tallow soap | 2 | 2 | 2 | 2 | 2 | 1.65 |
| Zeolite 4A | - | - | - | - | - | 27.12 |
| Zeolite MAP | 32 | 22 | 16 | - | - | - |
| Polymer of Example 7 | - | 10 | 16 | 20 | 16 | - |
| Acrylate/maleate polymer | - | - | - | - | - | 4.51 |
| Sodium carbonate | - | - | - | - | - | 18.4 |
| Sodium metaborate | 15 | 15 | 15 | 15 | 15 | - |
| Sodium tetraborate | 11.52 | 11.52 | 11.52 | 11.52 | 11.52 | - |
| Sodium silicate | 0.45 | 0.45 | 0.45 | 0.45 | 0.45 | 0.46 |
| Antifoam, bleach ingredients, SCMC, enzymes | 10.47 | 10.47 | 10.47 | 10.47 | 10.47 | 16.30 |
| Water, minors, salts to balance | | | | | | |
| **Results** (delta $R_{460}$) | | | | | | |
| Detergency | 31.8 | 32.5 | 33.2 | 32.4 | 33.2 | 31.2 |
| Antiredeposition | -1.04 | -0.66 | -0.25 | -0.08 | -0.14 | -1.4 |

Examples 25 to 27, Comparative Examples H and J

These Examples illustrate the capability of copolymers of the present invention to form flexible, cold-water-soluble

films superior to those obtainable from itaconate homopolymers.

The compositions of the polymers were as follows (IA = itaconic acid):

| Example | IA | Vinyl alcohol | Vinyl acetate | Mol wt | |
|---|---|---|---|---|---|
| | | | | $M_n$ | $M_w$ |
| 25* | 50 | - | 50 | 19 500 | 39 600 |
| 26 | 50 | 50 | - | 18 000 | 31 500 |
| 27 | 50 | 50 | - | 20 050 | 34 900 |
| H | 100 | - | - | 22 000 | 51 000 |
| J | 100 | - | - | 11 500 | 58 000 |

*The polymer used for Example 25 was the polymer of Example 3.

The table below shows the solubility (the time for 0.1 g of polymer to dissolve in 200 ml deionised water at 25°C); and the flexibility (assessed subjectively) of a film cast from each polymer.

| Example | Solubility | Flexibility |
|---|---|---|
| 25 | 10 min | good |
| 26 | 21 min | good |
| 27 | 50 min | good |
| H | 116 min | brittle |
| J | 56 min | brittle |

The advantages of the films obtained from the polymers according to the invention are clear.

## Claims

**1.** Use to bind divalent and polyvalent metals of a block copolymer comprising

(i) from 20 to 95 mole% of monomer units of the formula I

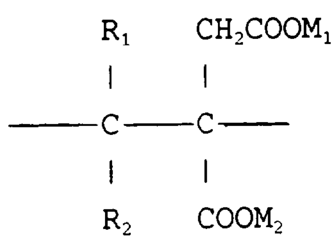

(I)

wherein each of $R_1$ and $R_2$, which may be the same or different, represents a hydrogen atom, a methyl group or an ethyl group, and each of $M_1$ and $M_2$, which may the same or different, is a hydrogen atom or a solubilising cation; and

(ii) from 5 to 80 mole% of monomer units of the formula II:

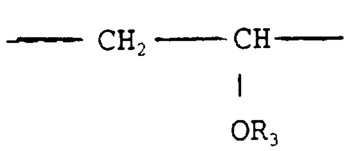

(II)

wherein $R_3$ represents a hydrogen atom or the group $-COR_4$ wherein $R_4$ is a $C_{1-4}$ alkyl group.

2. Use of a copolymer as claimed in claim 1, wherein $R_4$ in the formula II represents a methyl group.

3. Use of a copolymer as claimed in claim 1, wherein $R_1$ and $R_2$ in the formula I both represent hydrogen atoms.

4. Use of a copolymer as claimed in claim 1, which comprises from 30 to 95 mole % of units (i) and from 5 to 70 mole % of units (ii).

5. Use of a copolymer as claimed in claim 1, which comprises from 40 to 60 mole% of units (i) and from 40 to 60 mole% of units (ii).

6. Use of a copolymer as claimed in claim 1, having a number-average molecular weight within the range of from 1000 to 50 000.

7. Use of a copolymer as claimed in claim 1, having a weight-average molecular weight within the range of from 5000 to 100 000.

8. A detergent composition comprising at least one detergent-active compound and also comprising a detergency builder system consisting wholly or partially of a block copolymer as specified in any one of claims 1 to 7.

9. A detergent composition as claimed in claim 8, containing from 1 to 80 wt% of the block copolymer.

10. A detergent composition as claimed in claim 8, comprising from 0.5 to 60 wt% of detergent-active compound and from 15 to 80 wt% of detergency builder comprising the block copolymer.

11. Use as a water-soluble film substrate material and detergency builder for water-soluble detergent or wash additive sachets of a block copolymer comprising

(i) from 20 to 95 mole% of monomer units of the formula I

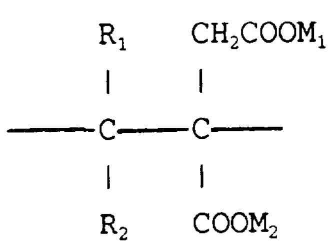

(I)

wherein each of $R_1$ and $R_2$, which may be the same or different, represents a hydrogen atom, a methyl group or an ethyl group, and each of $M_1$ and $M_2$, which may the same or different, is a hydrogen atom or a solubilising cation; and

(ii) from 5 to 80 mole% of monomer units of the formula II:

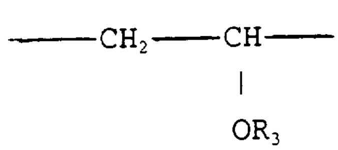

(II)

wherein $R_3$ represents a hydrogen atom or the group $-COR_4$ wherein $R_4$ is a $C_{1-4}$ alkyl group.

**Patentansprüche**

1. Verwendung eines Blockcopolymers, umfassend

(i) 20 bis 95 Molprozent Monomereinheiten der Formel I:

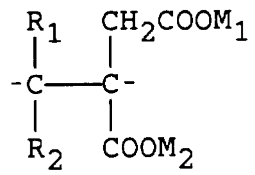

(I)

worin $R_1$ und $R_2$, die gleich oder verschieden sein können, jeweils ein Wasserstoffatom, eine Methylgruppe oder eine Ethylgruppe wiedergeben und jeder Rest $M_1$ und $M_2$, der gleich oder verschieden sein kann, ein Wasserstoffatom oder ein löslichmachendes Kation ist; und

(ii) 5 bis 80 Molprozent Monomereinheiten der Formel II:

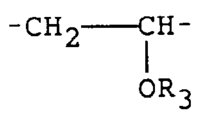

(II)

worin $R_3$ ein Wasserstoffatom oder die Gruppe $-COR_4$ bedeutet, wobei $R_4$ eine $C_{1-4}$-Alkylgruppe ist, zum Binden zweiwertiger und mehrwertiger Metalle.

2. Verwendung eines Copolymers nach Anspruch 1, wobei $R_4$ in Formel II eine Methylgruppe wiedergibt.

3. Verwendung eines Copolymers nach Anspruch 1, wobei $R_1$ und $R_2$ in Formel I beide Wasserstoffatome wiedergeben.

4. Verwendung eines Copolymers nach Anspruch 1, umfassend 30 bis 95 Molprozent Einheiten (i) und 5 bis 70 Molprozent Einheiten (ii).

5. Verwendung eines Copolymers nach Anspruch 1, umfassend 40 bis 60 Molprozent Einheiten (i) und 40 bis 60 Molprozent Einheiten (ii).

6. Verwendung eines Copolymers nach Anspruch 1 mit einem zahlenmittleren Molekulargewicht im Bereich 1000 bis 50 000.

7. Verwendung eines Copolymers nach Anspruch 1 mit einem gewichtsmittleren Molekulargewicht im Bereich 5000 bis 100 000.

8. Waschmittel, umfassend mindestens eine Waschmittelaktivstoffverbindung und ebenfalls umfassend ein Waschmittelbuildersystem, bestehend vollständig oder teilweise aus einem Blockcopolymer gemäß einem der Ansprüche 1 bis 7.

9. Waschmittel nach Anspruch 8, das 1 bis 80 Gewichtsprozent des Blockcopolymers enthält.

10. Waschmittel nach Anspruch 8, das 0,5 bis 60 Gewichtsprozent Waschmittelaktivstoffverbindung und 15 bis 80 Gewichtsprozent das Blockcopolymer umfassenden Waschmittelbuilder umfaßt.

11. Verwendung eines Blockcopolymers, umfassend

(i) 20 bis 95 Molprozent Monomereinheiten der Formel I:

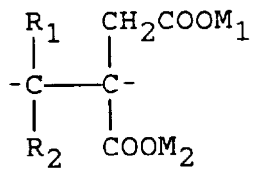

(I)

worin $R_1$ und $R_2$, die gleich oder verschieden sein können, jeweils ein Wasserstoffatom, eine Methylgruppe oder eine Ethylgruppe wiedergeben und jeder Rest $M_1$ und $M_2$, der gleich oder verschieden sein kann, ein Wasserstoffatom oder ein löslichmachendes Kation ist; und

(ii) 5 bis 80 Molprozent Monomereinheiten der Formel II:

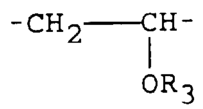

(II)

worin $R_3$ ein Wasserstoffatom oder die Gruppe $-COR_4$ bedeutet, wobei $R_4$ eine $C_{1-4}$-Alkylgruppe ist,

als wasserlösliches Foliensubstratmaterial sowie Waschmittelbuilder für wasserlösliche Waschmittel oder Waschmittelzusatzsäckchen.

**Revendications**

1. Utilisation d'un copolymère séquencé pour lier des métaux divalents et polyvalents, comprenant :

(i) de 20 à 95 moles% de motifs monomères de formule I :

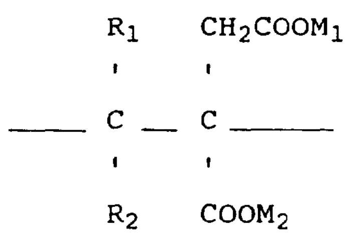

(I)

dans laquelle $R_1$ et $R_2$ qui peuvent être identiques ou différents, représentent chacun un atome d'hydrogène, un groupe méthyle ou un groupe éthyle et $M_1$ et $M_2$ , qui peuvent être identiques ou différents, représentent chacun un atome d'hydrogène ou un cation solubilisant ; et

(ii) de 5 à 80 moles% de motifs monomères de formule II :

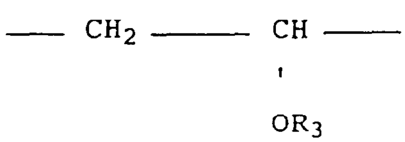

(II)

dans laquelle $R_3$ représente un atome d'hydrogène ou le groupe $-COR_4$, dans lequel $R_4$ est un groupe alkyle en $C_{1-4}$.

2. Utilisation d'un copolymère selon la revendication 1, dans laquelle $R_4$ dans la formule II représente un groupe méthyle.

**3.** Utilisation d'un copolymère selon la revendication 1, dans laquelle $R_1$ et $R_2$ dans la formule I représentent tous les deux des atomes d'hydrogène.

**4.** Utilisation d'un copolymère selon la revendication 1, qui comprend de 30 à 95 moles% de motifs (i) et de 5 à 70 moles% de motifs (ii).

**5.** Utilisation d'un copolymère selon la revendication 1, qui comprend de 40 à 60 moles% de motifs (i) et de 40 à 60 moles% de motifs (ii).

**6.** Utilisation d'un copolymère selon la revendication 1, ayant une masse moléculaire moyenne en nombre dans la gamme des 1000 à 50000.

**7.** Utilisation d'un copolymère selon la revendication 1, ayant une masse moléculaire moyenne en poids dans la gamme de 5000 à 100.000.

**8.** Composition détergente comprenant au moins un composé détergent actif et comprenant également un système adjuvant de détergence consistant entièrement ou partiellement en un copolymère séquencé comme spécifié dans l'une quelconque des revendications 1 à 7.

**9.** Composition détergente selon la revendication 8, contenant de 1 à 80% en poids de copolymère séquencé.

**10.** Composition détergente selon la revendication 8, comprenant de 0,5 à 60% en poids de composé détergent actif et de 15 à 80% en poids d'adjuvant de détergence comprenant le copolymère séquencé.

**11.** Utilisation comme matière de substrat pelliculaire hydrosoluble et d'adjuvant de détergence pour des sachets détergents ou d'additifs au lavage hydrosolubles d'un copolymère séquencés comprenant :

(i) de 20 à 95 mole% de motifs monomères de formule I :

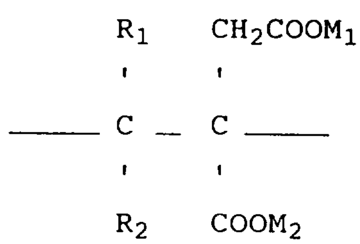

(I)

dans laquelle $R_1$ et $R_2$ qui peuvent être identiques ou différents, représentent chacun un atome d'hydrogène, un groupe méthyle ou un groupe éthyle et $M_1$ et $M_2$ , qui peuvent être identiques ou différents, représentent chacun un atome d'hydrogène ou un cation solubilisant ; et

(ii) de 5 à 80 moles% de motifs monomères de formule II :

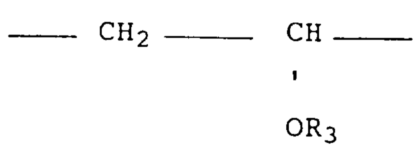

(II)

dans laquelle $R_3$ représente un atome d'hydrogène ou le groupe -COR4, dans lequel $R_4$ est un groupe alkyle en $C_{1-4}$.